Europäisches Patentamt

(19) European Patent Office

Office européen des brevets

(11) Numéro de publication: **0 058 613**
**A1**

(12) **DEMANDE DE BREVET EUROPEEN**

(21) Numéro de dépôt: **82400246.3**

(22) Date de dépôt: **11.02.82**

(51) Int. Cl.³: **A 01 M 21/04**

(30) Priorité: **17.02.81 FR 8103051**

(43) Date de publication de la demande:
**25.08.82 Bulletin 82/34**

(84) Etats contractants désignés:
**AT BE CH DE GB IT LI LU NL SE**

(71) Demandeur: **Rives, Gérard**
**37 Chemin de la Ségognole Noisy sur Ecole**
**F-77123 Le Vaudoue(FR)**

(72) Inventeur: **Rives, Gérard**
**37 Chemin de la Ségognole Noisy sur Ecole**
**F-77123 Le Vaudoue(FR)**

(74) Mandataire: **Barnay, André François et al,**
**Cabinet Barnay 80 rue Saint-Lazare**
**F-75009 Paris(FR)**

(54) Rampe d'humectation pour le traitement de végétaux ou l'enduction d'objets.

(57) L'invention concerne un dispositif permettant d'humecter à volonté et sans égouttage les végétaux que l'on veut détruire par contact à l'aide d'herbicide liquide ou traiter à l'aide de produits liquides sans détruire ou traiter les autres végétaux se trouvant à proximité et que l'on veut préserver.

Le dispositif objet de l'invention comprend un corps (1) qui forme un réservoir d'où émerge à sa partie avant un support (2) paré d'une bande spongieuse (3) qui reçoit le produit herbicide liquide par capillarité pour l'appliquer par frottement aux végégaux à détruire.

FIG. 1

EP 0 058 613 A1

Rampe d'humectation
pour le traitement de végétaux ou l'enduction d'objets.

L'invention se rapporte aux dispositifs permettant notamment d'appliquer sur des végétaux un produit liquide de traitement ou de destruction.

Dans des dipositifs connus de ce genre, des cordes sortant d'un réservoir sont imprégnées du produit qui va toucher les végétaux à détruire ou à traiter lorsque les cordes sont promenées sur ceux-ci. De tels dispositifs sont d'un emploi malaisé et manquent de précision. En effet, pendant l'utilisation, des gouttes peuvent s'échapper d'une manière inopportune et traiter ou tuer ainsi les végétaux que l'on voulait préserver du traitement ou du désherbage.

On connaît aussi d'autres dispositifs avec lesquels on pulvérise le produit, créant ainsi un brouillard qui ne manque pas de toucher les végétaux avoisinants à préserver, cet effet ayant aussi le désavantage de diminuer le rendement à l'hectare et provoquant une dépense supplémentaire et inutile de désherbant ou de produit de traitement.

On connaît encore un dispositif comportant une rampe d'humectation constituée par un réservoir oblong contenant le liquide de traitement dans lequel trempe une bande de matière spongieuse qui le transporte par capillarité jusque dans une partie extérieure émergeant du réservoir et permettant l'application du liquide sur les végétaux.

Toutefois, cette bande de matière spongieuse sort par le bas du réservoir et le risque d'échappement intempestif de gouttes existe également ici.

Afin d'écarter les inconvénients mentionnés ci-dessus, l'invention a pour objet une rampe d'humectation du genre indiqué en dernier lieu, caractérisée par le fait que la bande de matière spongieuse qu'elle comporte sort du réservoir vers le haut et que sa partie extérieure s'étend suivant une pente constamment ascendante (ou à la limite nulle). Une telle disposition évite que des gouttes se forment à la surface de la matière spongieuse saturée de liquide et tombent sur le sol en pure perte, ou même malencontreusement sur les plantes que l'on désire préserver. Par suite, tout le liquide disponible est appliqué par frottement uniquement sur les végétaux que l'on veut détruire, donc d'une manière économique.

Le dispositif selon l'invention a en particulier pour avantage de faciliter l'emploi des désherbants dits "systémiques", c'est-à-dire totaux, par opposition aux désherbants sélectifs, que l'on sait d'ailleurs n'être efficaces que s'ils touchent directement les végétaux à éliminer.

Dans une forme d'exécution avantageuse, la bande de matière spongieuse est fixée, au moins dans sa partie extérieure, sur un support solidaire du réservoir. Ce support, qui détermine la conformation ascendante de la bande de matière spongieuse, s'étend de préférence sur la face de ladite bande opposée à celle qui assure l'application du liquide par frottement. De plus, il se prolonge avantageusement à l'intérieur du réservoir auquel il peut être attaché de manière amovible afin de permettre l'échange en cas d'usure. La bande de matière spongieuse peut elle-même être fixée sur son support de manière amovible.

Dans le réservoir peut être prévue une cloison interne pour isoler la partie inférieure de la bande de matière spongieuse, laquelle ne reçoit le liquide que par une ouverture pratiquée à la base de ladite cloison. Cette disposition a pour but d'éviter tout effet de "vague" ou de "coup de bélier" lorsque le dispositif est soumis à des mouvements latéraux, à des vibrations ou à des chocs, notamment au cas où il est monté sur un véhicule porteur. La cloison interne définie ici participe également à la suppression de tout égouttage intempestif du liquide. Par ailleurs, le réservoir peut être rempli d'éléments évitant le ballottement du liquide qu'il contient, tels que des granulés ou des morceaux de matière spongieuse.

Le réservoir peut être alimenté par un réservoir principal, via un dispositif régulateur de débit, afin d'augmenter l'autonomie du dispositif.

Le dispositif selon l'invention offre essentiellement l'avantage de comporter un élément toujours humide, humecté par capillarité, qui vient toucher les seuls végétaux à détruire ou à traiter sans répandre aucune goutte risquant de toucher les végétaux sains que l'on veut préserver du désherbage ou du traitement.

Le dispositif objet de l'invention peut être utilisé dans tous les cas où la sortie d'un liquide hors d'un récipient doit être assurée d'une façon précise, et tout particulièrement pour humecter des objets, végétaux, minéraux ou toutes autres matières. Il peut être utilisé dans l'agriculture, ainsi que dans l'industrie pour le marquage ou pour l'enduction de colles, de peintures ou de produits chimiques.

La description qui va suivre en regard des dessins annexés à titre d'exemples non limitatifs, permettra de bien comprendre comment la présente invention peut être mise en pratique.

La figure 1 représente en coupe transversale un dispositif selon l'invention.

La figure 2 représente, en coupe verticale et à plus grande échelle, un régulateur de débit adaptable au dispositif de la figure 1.

La figure 3 représente, à échelle réduite et en perspective, le dispositif de la figure 1.

La figure 4 illustre schématiquement, en élévation latérale, un mode d'utilisation d'un dispositif selon l'invention.

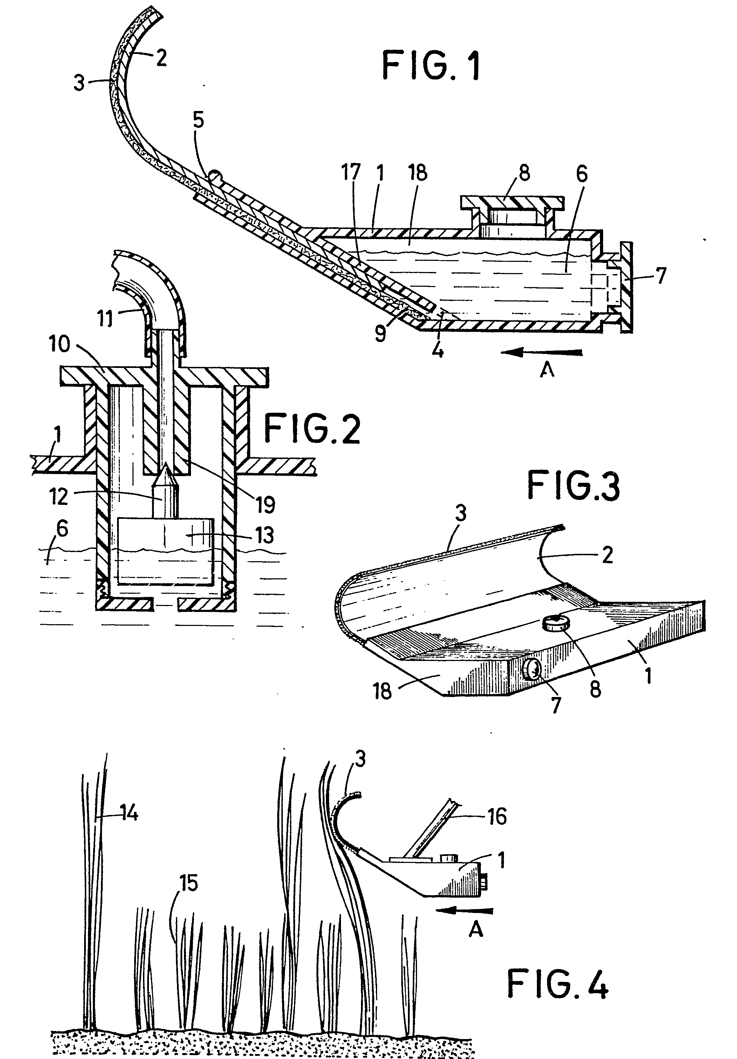

Le dispositif représenté à la figure 1 comporte un corps 1 formé par un profilé (par exemple en matière plastique) coupé à longueur suivant l'utilisation visée et fermé à ses extrémités par des flasques 18 de manière à constituer un réservoir recevant le liquide 6 à appliquer aux végétaux. Ce réservoir comporte une ouverture supérieure d'alimentation obturée par un bouchon 8 et une ouverture postérieure, servant à la vidange, obturée par un bouchon 7.

A l'avant du réservoir 1 et sur toute sa largeur apparaît une fente 5 recevant une bande de matière spongieuse 3 portée par un support 2 et garnie éventuellement de poils formant une brosse. La partie inférieure 9 de la bande 3 s'étend jusqu'au fond du réservoir 1 et baigne dans le liquide 6 que contient celui-ci, de sorte que la bande 3 se trouve entièrement humectée de liquide par capillarité. Cette bande 3 tapisse la face antérieure du support 2 (considérée suivant le sens d'avancement A du dispositif) qui est conformé de telle manière que la bande 3 sorte du réservoir 1 suivant un chemin ascendant et que sa partie extérieure au réservoir ne présente nulle part une pente dirigée vers le bas et soit située au-dessus de la surface du liquide 6 afin d'éviter que du liquide ne s'en égoutte. Le bord supérieur du support 2 est incurvé vers le haut pour faciliter la progression du dispositif dans les végétaux à traiter et pour favoriser l'humectation de ceux-ci. Une cloison 17 isole la partie inférieure 9 de la bande 3, laquelle reçoit le liquide par une ouverture 4 que présente cette cloison à sa partie inférieure.

La figure 2 montre un exemple de régulateur de débit utilisable pour alimenter le réservoir 1 à partir d'un réservoir principal (non représenté). Le bouchon 8 est remplacé par un bouchon 10 contenant un flotteur 13 doté d'un pointeau 12 qui coopère avec une tubulure d'entrée 19, raccordée par un tuyau d'alimentation 11 audit réservoir principal, pour maintenir constant le niveau du liquide 6 dans le réservoir 1. Cette disposition procure une plus grande autonomie de fonctionnement, la contenance du réservoir principal pouvant être très importante.

Le dispositif, porté par un manche ou support métallique 16 (figure 4) tenu à la main ou fixé à un engin agricole mobile, progresse suivant la flèche A à hauteur convenable, choisie par exemple pour assurer l'humectation par l'élément spongieux 3 de végétaux hauts 14 en évitant les végétaux bas 15 mêlés aux précédents. Dès que des végétaux sont léchés par la bande spongieuse 3, ils reçoivent du liquide, cette dernière se rechargeant par capillarité. Il n'y a donc consommation du liquide qu'au contact des végétaux à traiter.

## REVENDICATIONS

1.- Rampe d'humectation pour le traitement de végétaux ou l'enduction d'objets quelconques, constituée par un réservoir oblong contenant un liquide de traitement ou d'enduction dans lequel trempe une bande de matière spongieuse qui le transporte par capillarité jusque dans une partie extérieure émergeant hors du réservoir et permettant l'application du liquide aux végétaux ou objets par frottement, caractérisée par le fait que la bande de matière spongieuse (3) sort du réservoir (1) vers le haut et que sa partie extérieure s'étend suivant une pente constamment ascendante (ou à la limite nulle).

2.- Rampe selon la revendication 1, caractérisée par le fait que la bande de matière spongieuse (3) est fixée, au moins dans sa partie extérieure, sur un support (2) solidaire du réservoir (1).

3.- Rampe selon la revendication 2, caractérisée par le fait que le support (2) s'étend sur la face de la bande de matière spongieuse (3) opposée à celle qui assure l'application du liquide par frottement.

4.- Rampe selon la revendication 2 ou 3, caractérisée par le fait que le support (2) se prolonge à l'intérieur du réservoir (1).

5.- Rampe selon l'une quelconque des revendications 2 à 4, caractérisée par le fait que le support (2) est monté sur le réservoir (1) de manière amovible.

6.- Rampe selon l'une quelconque des revendications 2 à 5, caractérisée par le fait que la bande de matière spongieuse (3) est fixée sur son support (2) de manière amovible.

7.- Rampe selon l'une quelconque des revendications 1 à 6, caractérisée par le fait qu'une cloison interne (17) est prévue dans le réservoir (1), qui isole la partie inférieure (9) de la bande de matière spongieuse (3), laquelle ne reçoit le liquide (6) que par une ouverture (4) pratiquée à la base de cette cloison.

8.- Rampe selon l'une quelconque des revendications 1 à 7, caractérisée par le fait que le réservoir (1) est rempli d'éléments évitant le ballottement du liquide (6) qu'il contient.

9.- Rampe selon l'une quelconque des revendications 1 à 8, caractérisée par le fait que le réservoir (1) est alimenté par un réservoir principal via un dispositif régulateur de débit (12,13,14).

10.- Rampe selon l'une quelconque des revendications 1 à 9, caractérisée par le fait que le réservoir (1) est réalisé par assemblage d'un tronçon de profilé creux et d'une paire d'embouts de fermeture.

0058613

**FIG. 1**

**FIG.2**

**FIG.3**

**FIG.4**

Office européen
des brevets

**RAPPORT DE RECHERCHE EUROPEENNE**

EP 82 40 0246

| Catégorie | Citation du document avec indication, en cas de besoin, des parties pertinentes | Revendication concernée | |
|---|---|---|---|
| | **DOCUMENTS CONSIDERES COMME PERTINENTS** | | CLASSEMENT DE LA DEMANDE (Int. Cl. ³) |
| Y | GB - A - 1 508 709 (SOCIETE D' ETUDES ET DE CONSTRUCTIONS ME-CANIQUES DE CORBEIL) | | A 01 M 21/04 |
| | * page 3, lignes 50-66; figure 3 * | 1 | |
| | -- | | |
| Y | US - A - 4 219 964 (J.E. DALE) | | |
| | * colonne 2, ligne 65 - colonne 3, ligne 62; figures 1-4 * | 1 | |
| | -- | | DOMAINES TECHNIQUES RECHERCHES (Int. Cl. ³) |
| A | FR - A - 2 437 164 (J.E. HARDY et al.) | | A 01 M |
| A | US - A - 3 021 642 (B.E. EWING) | | |
| A | US - A - 3 257 753 (M.M. ZENNIE) | | |
| | ------ | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 01.04.1982 | NEHRDICH |

OEB Form 1503.1   06.78